# EUROPÄISCHE PATENTSCHRIFT

(11) **EP 4 421 019 B1**
(45) Veröffentlichungstag und Bekanntmachung des Hinweises auf die Patenterteilung: **18.06.2025**
(21) Anmeldenummer: 24187611.9
(22) Anmeldetag: 24.09.2020
(51) Int. Cl.: B66F 9/075, B66F 9/24, G01M 17/02, B66F 17/00

(54) **VERFAHREN ZUM BETREIBEN EINES FLURFÖRDERZEUGS UND FLURFÖRDERZEUG**
METHOD FOR OPERATING AN INDUSTRIAL TRUCK AND INDUSTRIAL TRUCK
PROCÉDÉ DE FONCTIONNEMENT D'UN CHARIOT DE MANUTENTION ET CHARIOT DE MANUTENTION

(30) Priorität: 21.10.2019 DE 102019128343
(43) Veröffentlichungstag der Anmeldung: 28.08.2024
(62) Teilanmeldung aus: 20198019.0
(73) Patentinhaber: Linde Material Handling GmbH, 63743 Aschaffenburg (DE)
(72) Erfinder: EDDIN, Mohamad Ghassan Sharaf, 36088 Hünfeld (DE); HANKE, Mark, 63739 Aschaffenburg (DE); REINHARDT, Tobias, 64287 Darmstadt (DE)
(74) Vertreter: Patentship Patentanwaltgesellschaft

(56) Entgegenhaltungen:
- DE-A1- 102011 053 963
- DE-A1- 102013 109 828
- JP-A- 2003 063 792
- JP-A- H04 317 999

## Beschreibung

Die Erfindung betrifft ein Verfahren zum Betreiben eines auf Radreifen, insbesondere Superelastik-Reifen oder Luftreifen, auf einem Fahrboden fahrenden Flurförderzeugs, wobei Fahrzeugeigenschaften des Flurförderzeugs von einer Fahrzeugsteuerungseinrichtung gesteuert werden und ein Reifenverschleiß der Radreifen von einer Reifenverschleißmesseinrichtung gemessen wird, sowie ein Flurförderzeug zur Durchführung des Verfahrens.

Als Radreifen für Flurförderzeuge, insbesondere Gabelstapler, werden überwiegend sogenannte Superelastik-Reifen eingesetzt. Im Gegensatz zu Autoreifen können diese Reifen recht weit abgefahren werden. Es handelt sich dabei üblicherweise nicht um luftbefüllte Reifen, sondern um Vollgummireifen. Sie bestehen meistens aus mehreren Schichten unterschiedlicher Materialien, wobei die Reifen fast bis auf eine Tragschicht abgefahren werden können.

Beim Betrieb von automatisiert fahrenden Flurförderzeuge (auch autonome Fahrzeuge oder "Automated Guided Vehicles", AGV, genannt) werden derzeit hauptsächlich verschleißarme Bandage-Reifen genutzt, die allerdings nur auf Böden hoher Qualität, also mit hoher Ebenheit, zuverlässig betrieben werden können. Im Zuge der weiteren Verbreitung von autonomen Flurförderzeuge sollen diese autonomen Flurförderzeuge zunehmend auch auf schlechteren Böden oder im Außenbereich fahren, was den Einsatz von Superelastik-Reifen oder Luftreifen erfordert.

Da diese Superelastik-Reifen während ihrer Lebensdauer wesentlich stärker verschleißen als Bandagereifen, führt das unter Umständen zu einer Neigung des Flurförderzeugs. Dies kann zum Beispiel dann der Fall sein, wenn Vorderräder stärker verschleißen als Hinterräder.

Üblicherweise wird eine senkrechte Stellung des Hubmasts eines Flurförderzeugs bei der Montage einmal eingestellt und "geteacht". Dies ist auch bei einem fahrerlosen und somit autonomen Flurförderzeug mit einem Hubmast der Fall. Neigt sich das Flurförderzeuge nun im Lauf des Betriebs infolge Reifenverschleiß nach vorne oder hinten, ist auch die vermeintlich senkrechte Position des Hubmasts nicht mehr senkrecht und muss insbesondere beim autonomen Flurförderzeug durch erneutes Teachen korrigiert werden. Bei einem bemannten Flurförderzeug gleicht der Fahrer solche Fehler durch manuelles Neigen des Hubmasts aus.

Die bei autonomen Flurförderzeugen üblichen Kollisionssensoren zum Schutz des Flurförderzeugs vor Kollisionen, die insbesondere als Laserscanner ausgebildet sein können, müssen außerdem derart ausgerichtet werden, dass die Scanebene des Kollisionssensors horizontal, also parallel zum Boden liegt. Das ist beim Betrieb eines autonomen Flurförderzeugs mit Bandagereifen aufgrund des geringen Reifenverschleißes unproblematisch. Beim Betrieb eines autonomen Flurförderzeugs mit Superelastik-Reifen oder Luftreifen kann allerdings eine Fahrzeugneigung infolge Reifenverschleiß dazu führen, dass beispielsweise ein am Boden liegender Mensch nicht mehr rechtzeitig oder im Extremfall gar nicht mehr erkannt wird.

Die Neigung des Flurförderzeugs, insbesondere eines autonomen Flurförderzeugs, infolge von Reifenverschleiß führt somit dazu, dass beispielsweise der Hubmast nicht mehr exakt senkrecht steht und insbesondere bei autonomen Flurförderzeugen Probleme beim automatisierten Einstechen der Gabelzinken in eine Palette oder Gitterbox entstehen.

Weiterhin kann bei autonomen Flurförderzeugen infolge Reifenverschleiß der beispielsweise als Laserscanner ausgebildete Kollisionssensor nicht mehr exakt parallel zum Boden ausgerichtet sein, was sich negativ auf die Reichweite des Kollisionssensors auswirkt. In dem einen Extremfall ist die Scanebene nach unten geneigt, so dass der Kollisionssensor nicht mehr weit genug vorausschauen kann. Im anderen Extremfall ist der Kollisionssensor nach oben geneigt, so dass er keine flachen, auf dem Boden liegenden Hindernisse mehr erkennt. Folglich muss ein autonom und somit fahrerlos fahrendes Flurförderzeug auf diesen schlimmsten Fall ausgelegt werden. Das bedeutet, dass man wegen der verringerten Reichweite des Kollisionssensors die Fahrzeuggeschwindigkeit stark reduzieren muss, damit das autonome Flurförderzeug noch vor Erreichen eines Hindernisses angehalten werden kann und zum Stehen kommt. DE 10 2011 053963 A1 offenbart einen Verfahren nach dem Oberbegriff des Anspruchs 1, sowie ein Flurförderzeug zur Durchführung des Verfahrens.

Der vorliegenden Erfindung liegt die Aufgabe zugrunde, ein Verfahren und ein Flurförderzeug der eingangs genannten Art so auszugestalten, dass die negativen Auswirkungen des Reifenverschleißes auf die Fahrzeugeigenschaften verringert werden.

Diese Aufgabe wird verfahrensseitig erfindungsgemäß dadurch gelöst, dass mindestens eine Fahrzeugeigenschaft des Flurförderzeugs in Abhängigkeit vom Reifenverschleiß der Radreifen aktiv durch die Fahrzeugsteuerungseinrichtung beeinflusst wird, wobei als Fahrzeugeigenschaft eine maximal zulässige Fahrgeschwindigkeit des Flurförderzeugs verwendet wird, die in Abhängigkeit vom Reifenverschleiß der Radreifen aktiv verändert wird, insbesondere die maximal zulässige Fahrgeschwindigkeit in Rückwärtsfahrtrichtung, wobei die maximal zulässige Fahrgeschwindigkeit in Abhängigkeit von einer Veränderung der Position und/oder Ausrichtung eines am Flurförderzeug angeordneten Kollisionssensors gegenüber dem Fahrboden infolge des Reifenverschleißes der Radreifen angepasst wird.

Dabei liegt der Erfindung die Überlegung zu Grunde, dass die Auswirkungen des Reifenverschleißes durch einen aktiven Eingriff der Fahrzeugsteuerung in die Fahrzeugeigenschaften kompensiert werden können. Hierzu wird der Reifenverschleiß gemessen und nach Auswertung der Messergebnisse ein gezielter Eingriff durch die Fahrzeugsteuerungseinrichtung durchgeführt.

In einer bevorzugten Ausgestaltung der Erfindung wird als Fahrzeugeigenschaft mindestens eine veränderbare Ausrichtung einer Fahrzeugvorrichtung verwendet, wobei die Ausrichtung in Abhängigkeit vom Reifenverschleiß der Radreifen derart verändert wird, dass eine Neigung des Flurförderzeugs infolge des Reifenverschleißes der Radreifen kompensiert wird. Neigt sich also beispielsweise die Fahrzeugvorrichtung infolge des unterschiedlichen Reifenverschleißes an Vorder- und Hinterradachse des Flurförderzeugs mit der Fahrzeuglängsachse, so kann durch ein der Neigungsrichtung entgegengesetztes Verdrehen der Fahrzeugvorrichtung die Auswirkung des Reifenverschleißes kompensiert werden. Somit kann erreicht werden, dass auch bei einem Reifenverschleiß die absolute Ausrichtung der Fahrzeugvorrichtung im Raum erhalten bleibt.

Mit Vorteil wird als Fahrzeugvorrichtung ein Lastaufnahmemittel des Flurförderzeugs verwendet, wobei die Ausrichtung des Lastaufnahmemittels relativ zum Flurförderzeug in Abhängigkeit vom Reifenverschleiß der Radreifen aktiv so verändert wird, dass die absolute Ausrichtung des Lastaufnahmemittels gegenüber dem Fahrboden konstant bleibt.

Dabei wird in einer besonders vorteilhaften Ausgestaltung als Lastaufnahmemittel ein Hubmast verwendet. Außerdem wird die Ausrichtung des Hubmastes relativ zum Flurförderzeug derart in Abhängigkeit vom Reifenverschleiß der Radreifen aktiv verändert, dass die absolute Ausrichtung des Hubmastes vertikal bleibt.

Eine weitere bevorzugte Ausführungsform sieht vor, dass als Lastaufnahmemittel Gabelzinken verwendet werden, und die Ausrichtung der Gabelzinken relativ zum Flurförderzeug derart in Abhängigkeit vom Reifenverschleiß der Radreifen aktiv verändert wird, dass die absolute Ausrichtung der Gabelzinken horizontal bleibt. Damit wird sichergestellt, dass auch im fahrerlosen, automatisierten Betrieb des Flurförderzeugs die Gabelzinken unabhängig vom Verschleißzustand der Radreifen immer horizontal ausgerichtet sind. Somit ist jederzeit ein sauberes Einstechen der Gabelzinken in Paletten oder Gitterboxen möglich. Ebenso ergibt sich beim Betrieb mit einem Fahrer der Vorteil, dass die Notwendigkeit eines manuellen Korrigierens der Ausrichtung der Gabelzinken entfällt, wodurch der Bedienkomfort erhöht wird.

In einer besonders bevorzugten Ausgestaltung wird als Fahrzeugvorrichtung ein Kollisionssensor des Flurförderzeugs verwendet, wobei die Ausrichtung des Kollisionssensors relativ zum Flurförderzeug in Abhängigkeit vom Reifenverschleiß der Radreifen aktiv so verändert wird, dass die absolute Ausrichtung des Kollisionssensors gegenüber dem Fahrboden konstant bleibt. Damit wird verhindert, dass der Kollisionssensor beispielsweise wegen der Neigung des Flurförderzeugs infolge eines ungleichmäßigen Reifenverschleißes an den Radachsen des Flurförderzeugs nicht mehr exakt parallel zum Fahrboden ausgerichtet ist. Mit der Korrektur durch die Fahrzeugsteuerungseinrichtung wird erreicht, dass die parallele Ausrichtung erhalten bleibt, so dass die optimale Reichweite des Kollisionssensors sichergestellt ist.

Gemäß der Erfindung wird als Fahrzeugeigenschaft eine maximal zulässige Fahrgeschwindigkeit des Flurförderzeugs verwendet, die in Abhängigkeit vom Reifenverschleiß der Radreifen aktiv verändert wird. Damit wird gewährleistet, dass das Flurförderzeug auch bei fortgeschrittenem Verschleiß der Radreifen in einem sicheren Betriebszustand bleibt.

Dabei wird erfindungsgemäß die maximal zulässige Fahrgeschwindigkeit in Abhängigkeit von einer Veränderung der Position und/oder Ausrichtung eines am Flurförderzeug angeordneten Kollisionssensors gegenüber dem Fahrboden infolge des Reifenverschleißes der Radreifen angepasst. Hierbei wird die maximal zulässige Fahrgeschwindigkeit vorteilhafterweise derart angepasst, dass das Flurförderzeug innerhalb der Reichweite des Kollisionssensors angehalten werden kann.

Mit der genauen Kenntnis der aktuellen Position des Kollisionssensors, insbesondere seiner Höhe über dem Fahrboden, und der Ausrichtung des Kollisionssensors, insbesondere seines Neigungswinkels, der abhängig ist von dem Reifenverschleiß, gegen den Fahrboden, kann exakt berechnet werden, wie weit der Messstrahl des Kollisionssensors in Abhängigkeit vom Reifenverschleiß reicht, bis er auf den Fahrboden trifft, beziehungsweise bis er Hindernisse von einer vorgegebenen Höhe von zum Beispiel 200 mm nicht mehr erkennen kann. Somit kann wiederum abgeleitet werden, wie schnell das Flurförderzeug mit dem aktuell vorliegenden Reifenverschleiß maximal fahren darf, damit das Flurförderzeug rechtzeitig vor einem Hindernis angehalten werden kann und zum Stehen kommt. Diese maximale Fahrgeschwindigkeit kann entsprechend des Reifenverschleißes ständig in bestimmten Intervallen, beispielsweise täglich oder wöchentlich, angepasst werden. Somit kann das Flurförderzeug sicher und effizient auch im automatisierten Zustand betrieben werden.

Zweckmäßigerweise wird der Reifenverschleiß mittels mindestens eines am Flurförderzeug angeordneten Entfernungssensors, der die Entfernung des Entfernungssensors zum Fahrboden misst, ermittelt.

In einer Variante der Erfindung, die einen besonders geringen technischen Aufwand erfordert, misst der Entfernungssensor die Entfernung des Entfernungssensors zum Fahrboden entlang einer senkrecht zum Fahrboden ausgerichteten Messstrecke. Auf diese Weise kann der senkrechte Abstand des Fahrzeugs zum Fahrboden an einer bestimmten Stelle des Flurförderzeugs, vorzugsweise im Bereich einer Radachse, unmittelbar festgestellt werden. Aus der Veränderung des senkrechten Abstands während der Betriebszeit des Fahrzeugs kann auf die Veränderung des Reifendurchmessers und damit auf den Reifenverschleiß an dieser Radachse geschlossen werden.

Eine andere vorteilhafte Variante der Erfindung sieht vor, dass der Entfernungssensor die Entfernung des Entfernungssensors zum Fahrboden entlang einer um einen Neigungswinkel zum Fahrboden geneigt ausgerichteten Messstrecke misst. Aus der Entfernung bis zum Berührpunkt der Messstrecke mit dem Fahrboden und dem Neigungswinkel kann in einer Datenverarbeitungseinrichtung, insbesondere in der Fahrzeugsteuerungseinrichtung, der senkrechte Abstand zum Fahrboden berechnet werden. Auf diese Weise kann der senkrechte Abstand des Fahrzeugs zum Fahrboden an einer bestimmten Stelle des Flurförderzeugs, vorzugsweise im Bereich einer Radachse, festgestellt werden. Aus der Veränderung des senkrechten Abstands während der Betriebszeit des Fahrzeugs kann auf die Veränderung des Reifendurchmessers und damit auf den Reifenverschleiß an dieser Radachse geschlossen werden.

Dabei kann der Neigungswinkel beispielsweise aufgrund einer schräg am Fahrzeug montierten Halterung des Entfernungssensors fest vorgegeben sein.

Gemäß einer bevorzugten Ausgestaltung der Erfindung ist der Neigungswinkel aber veränderlich, wobei der Neigungswinkel mittels eines Neigesensors gemessen wird.

Dabei wird der Entfernungssensor vorzugsweise beim Messvorgang aus einer Ausgangsposition mit parallel zum Fahrboden ausgerichteter Messstrecke in eine Messposition mit um den Neigungswinkel zum Fahrboden geneigt ausgerichteter Messstrecke gebracht. Aus der mittels des Entfernungssensors gemessenen Entfernung des Entfernungssensors zum Berührpunkt der Messstrecke mit dem Fahrboden und dem mittels des Neigesensors gemessenen Neigungswinkel der Messtrecke wird dann in der Datenverarbeitungseinrichtung, beispielsweise der Fahrzeugsteuerungseinrichtung, die senkrechte Entfernung und somit der senkrechte Abstand (Höhe) des Entfernungssensors zum Fahrboden berechnet. Wird diese Messung periodisch in zeitlichen Abständen, beispielsweise täglich, an einer definierten Stelle, an der der Fahrboden eben und unbeschädigt ist, durchgeführt, ergibt die Änderung der Höhe des Entfernungssensors über dem Fahrboden die zeitliche Änderung des Reifendurchmessers und somit den Reifenverschleiß an der im Bereich des Entfernungssensors befindlichen Radachse.

Zweckmäßigerweise wird als Entfernungssensor ein an einer neigbaren Vorrichtung, insbesondere einem Hubmast eines Flurförderzeugs, angeordneter Entfernungssensor verwendet.

In einer besonders vorteilhaften Ausgestaltung der Erfindung wird als Entfernungssensor ein zum Kollisionsschutz des Flurförderzeugs vorgesehener Kollisionssensor verwendet. Auf diese Weise kann ein an dem Flurförderzeug bereits vorhandener Kollisionssensor für die Messung des Reifenverschleißes benutzt werden. Dadurch können Investitionskosten eingespart werden. Im Regelbetrieb kann der Entfernungssensor in seiner Ausgangsposition mit parallel zum Fahrboden ausgerichteter Messstrecke verbleiben, wobei er beispielsweise den Raum vor dem Flurförderzeug überwacht und somit als Sensor zum Kollisionsschutz dient. In zeitlichen Abständen, beispielsweise einmal täglich vor Beginn des Regelbetriebs, kann der Entfernungssensor zum Messvorgang aus der Ausgangsposition in die Messposition mit geneigter Messstrecke gebracht werden, um die Reifenverschleißmessung durchzuführen.

Besonders im Falle eines automatisiert fahrenden Fahrzeugs ist es von besonderem Vorteil, einen für den Schutz vor Kollisionen bereits vorhandenen Entfernungssensor, also einen Kollisionsschutzsensor, ebenso für die Ermittlung des Reifenverschleißes zu nutzen.

Dabei kann als Entfernungssensor ein optischer Sensor, insbesondere ein Laserscanner, beispielsweise 1-D oder 2-D oder 3-D-Laserscanner, oder eine Kamera, beispielsweise Stereokamera oder Time-of-Flight-Kamera, oder ein Ultraschallsensor verwendet werden. Insbesondere bei automatisiert fahrenden Fahrzeugen sind ein Laserscanner und/oder eine Kamera zum Kollisionsschutz üblicherweise bereits verbaut und können mittels einer neigbaren Vorrichtung auf einfache Weise zur Reifenverschleißmessung genutzt werden.

Gemäß einer besonders bevorzugten Ausgestaltung der Erfindung ist bei einem Flurförderzeug mit mindestens zwei Radachsen vorgesehen, dass mittels des Entfernungssensors die Entfernung des Entfernungssensors vom Fahrboden im Bereich einer der Radachsen gemessen wird, und aus einer Veränderung dieses Messwertes die Veränderung des Reifendurchmessers an der gemessenen Radachse ermittelt wird und die Veränderung des Reifendurchmessers an der nicht gemessenen Radachse aus dem von einem Lagesensor gemessenen Nickwinkel der gedachten Verbindungsachse zwischen den Radachsen des Flurförderzeugs bei vorgegebenem Radstand ermittelt wird.

Beispielsweise kann durch Vergleich mit dem Nickwinkel im Ursprungszustand, bei dem neue, noch keinen Verschleiß aufweisende, Radreifen vorliegen, erkannt werden, ob der Reifenverschleiß an der nicht gemessenen Radachse genauso groß ist, also der relative Nickwinkel = 0 ist, oder größer ist, also der relative Nickwinkel > 0 ist, oder kleiner ist, also der relative Nickwinkel < 0 ist, als der Reifenverschleiß an der gemessenen Radachse. Mit Hilfe des Radstands kann der absolute Reifenverschleiß an der nicht gemessenen Radachse berechnet werden.

Die Erfindung betrifft ferner ein Flurförderzeug zur Durchführung des Verfahrens mit einer Fahrzeugsteuerungseinrichtung und einer Reifenverschleißmesseinrichtung.

Bei dem Flurförderzeug wird die gestellte Aufgabe dadurch gelöst, dass die Fahrzeugsteuerungseinrichtung mit der Reifenverschleißmesseinrichtung in Wirkverbindung steht, und die Fahrzeugsteuerungseinrichtung dazu eingerichtet ist, von der Reifenverschleißmesseinrichtung übermittelte Messwerte auszuwerten und mindestens eine Fahrzeugeigenschaft des Flurförderzeugs in Abhängigkeit vom Reifenverschleiß aktiv zu beeinflussen.

Bevorzugt ist das Flurförderzeug als Gabelstapler, Schlepper, Plattformwagen Hubwagen, Schubmaststapler oder Kommissionierfahrzeug, ausgebildet.

Mit besonderem Vorteil ist das Flurförderzeug als autonomes Fahrzeug, insbesondere als autonomes Transportfahrzeug oder als mobiler Kommissionierroboter, ausgebildet.

Weitere Vorteile und Einzelheiten der Erfindung werden anhand der in den schematischen Figuren dargestellten Ausführungsbeispiele näher erläutert. Hierbei zeigen
- Figur 1: ein autonomes Flurförderzeug mit neuwertigen Radreifen,
- Figur 2: das Flurförderzeug aus Figur 1 mit verschlissenen Radreifen an der Vorderradachse, und
- Figur 3: das Flurförderzeug aus Figur 1 bei der Reifenverschleißmessung.

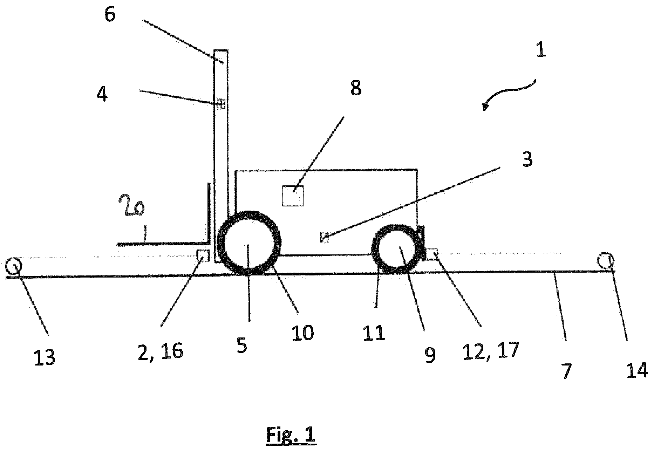

In Figur 1 ist ein autonomes Flurförderzeug 1 dargestellt. Das Flurförderzeug ist beispielsweise als Gabelstapler ausgeführt.

Das Flurförderzeug 1 weist ein Fahrzeugchassis mit zwei Radachsen 5, 9 auf, von denen im dargestellten Ausführungsbeispiel die Radachse 5 als Vorderachse und die Radacse 9 als Hinterachse ausgebildet ist. Die als Vorderachse ausgebildete Radachse 5 ist mit einem oder zwei Radreifen 10 versehen, die als Superelastik-Reifen oder Luftreifen ausgebildet sind. Die als Hinterachse ausgebildete Radachse 9 ist mit einem oder zwei Radreifen 11 versehen, die als Superelastik-Reifen oder Luftreifen ausgebildet sind. Mit den Radreifen 10, 11 stützt sich das Flurförderzeug auf einem Fahrboden 7 an.

Im dargestellten Ausführungsbeispiel ist das Flurförderzeug 1 mit einem Hubmast 6 versehen, an dem ein Lastaufnahmemittel 20 in Form einer Lastgabel mit zwei Gabelzinken anhebbar und absenkbar angeordnet ist. Der Hubmast 6 kann um eine horizontale Querachse neigbar sein.

Das autonome Flurförderzeug 1 weist zwei Entfernungssensoren 2 und 12, einen Lagesensor 3 und einen Neigesensor 4 auf. Die Entfernungssensoren 2 und 12 sind jeweils beispielsweise als 2D-Laserscanner ausgebildet und dienen als Kollisionssensoren 16 und 17 zum Kollisionsschutz des autonomen Flurförderzeugs 1. Der Entfernungssensor 2 bzw. Kollisionssensor 16 ist nahe der Vorderradachse 5 des Fahrzeugs 1, im dargestellten Ausführungsbeispiel 1 am neigbaren Hubmast 6 angebracht, und sichert den vorderen Bereich des Flurförderzeugs 1 ab. Die Scanebene des Entfernungssensors 2 bzw. Kollisionssensors 16 in der Ausgangsposition ist parallel zum Fahrboden 7 ausgerichtet. Der zweite Entfernungssensor 12 bzw. Kollisionssensor 17 ist nahe der Hinterradachse 9 angeordnet und sichert den hinteren Bereich des Flurförderzeugs 1 ab. Die Scanebene des Entfernungssensors 12 bzw. Kollisionssensors 17 in der Ausgangsposition ist ebenfalls parallel zum Fahrboden 7 ausgerichtet.

An dem neigbaren Hubmast 6 ist der Neigesensor 4 angeordnet. Der Neigesensor 4 ist bevorzugt als absolut messender Lagesensor ausgebildet.

Der Lagesensor 3 befindet sich im oder am Fahrzeugchassis des Flurförderzeugs 1. Der Lagesensor 3 ist bevorzugt als absolut messender Lagesensor ausgebildet.

In einer Fahrzeugsteuerungseinrichtung 8 werden die Messwerte der Entfernungssensoren 2 und 12 bzw. Kollisionssensoren 16 und 17 sowie des Lagesensors 3 und des Neigesensors 4 ausgewertet und bei der Steuerung des Flurförderzeugs 1 berücksichtigt.

Die Figur 1 zeigt das autonome Flurförderzeug 1 mit neuwertigen Radreifen 10 und 11 an den Radachsen 5 und 9, die als Superelastik-Reifen oder Luftreifen ausgebildet sind. Das Flurförderzeug 1 steht horizontal auf dem Fahrboden 7 und die Scanebenen der Entfernungssensoren 2 und 12 bzw. Kollisionssensoren 16 und 17 sind exakt parallel zum Fahrboden 7 ausgerichtet. Die Entfernungssensoren 2 und 12 bzw. Kollisionssensoren 16 und 17 können so auch weit entfernt auf dem Fahrboden 7 liegende Hindernisse 13, 14 erkennen.

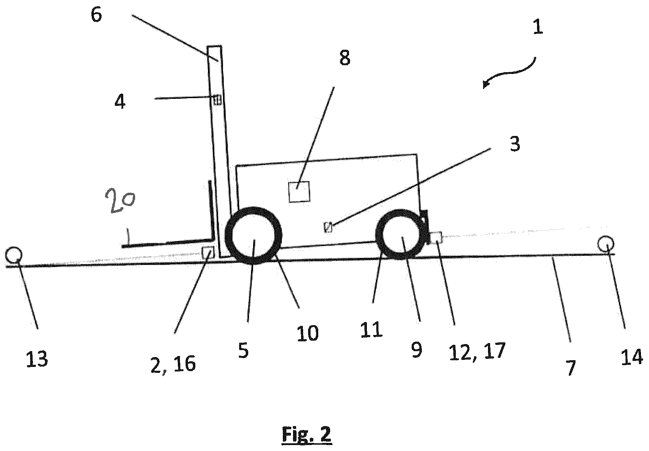

In der Figur 2 ist das Flurförderzeug 1 aus der Figur 1 mit verschlissenen Radreifen 10 an der Vorderradachse 5 dargestellt. An der Hinterradachse 9 sind dagegen neuwertige Radreifen 11 montiert. Dies hat zur Folge, dass das Flurförderzeug 1 entlang der Fahrzeuglängsachse nach vorne geneigt ist. Somit sind die Entfernungssensoren 2 und 12 bzw. Kollisionssensoren 16 und 17 nicht mehr exakt parallel zum Fahrboden 7 ausgerichtet, was sich negativ auf deren Reichweite auswirkt. Die Scanebene des vorderen Entfernungssensors 2 bzw. Kollisionssensor 16 ist nach unten geneigt, so dass der Entfernungssensor 2 bzw. Kollisionssensor 16 nicht mehr weit genug vorausschauen kann. Daher kann der Entfernungssensor 2 bzw. Kollisionssensor 16 das Hindernis 13 nicht mehr erfassen. Andererseits ist die Scanebene des hinteren Entfernungssensor 12 bzw. Kollisionssensor 17 nach oben geneigt, so dass der Entfernungssensor 12 bzw. Kollisionssensor 17 das flach auf dem Fahrboden 7 liegende Hindernis 14 nicht mehr erkennen kann.

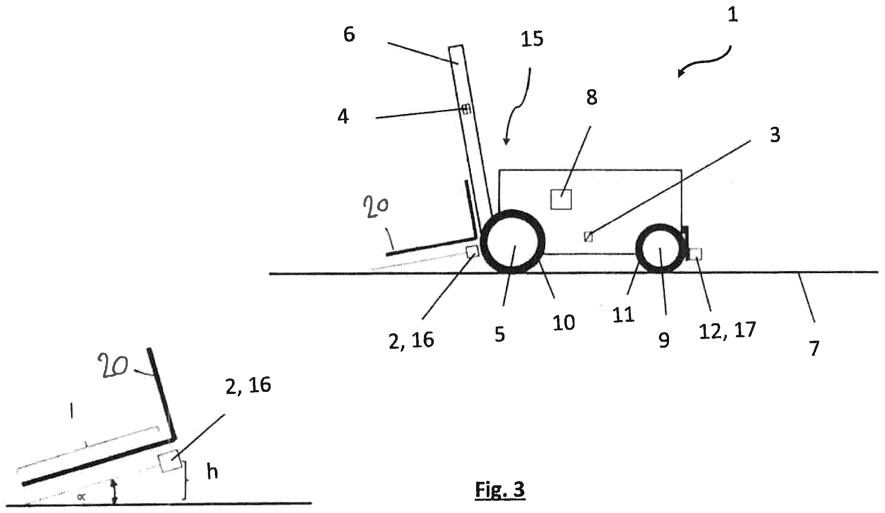

Diese Situation der Figur 2 kann durch eine Reifenverschleißmessung, wie sie im Zusammenhang mit der Figur 3 näher erläutert wird, erkannt und in der Fahrzeugsteuerungseinrichtung 8 berücksichtigt werden. In diesem Fall kann die Fahrzeugsteuerungseinrichtung 8 zur Kompensation der negativen Auswirkungen des Reifenverschleißes den Steuerbefehl ausgeben, den Hubmast 6 entgegen der Neigungsrichtung des Flurförderzeugs 1 zu neigen, bis er wieder absolut vertikal im Raum ausgerichtet ist. Die absolute Ausrichtung des Hubmastes 6 wird durch den absolut messenden Neigesensor 4 gemessen. Die vertikale Ausrichtung des Hubmastes 6 hat zur Folge, dass die Scanebene des am Hubmast 6 angebrachten Entfernungssensors 2 bzw. Kollisionssensors 16 unabhängig vom Reifenverschleiß wieder exakt parallel zum Fahrboden 7 ausgerichtet ist. Somit kann das Hindernis 13 wieder erkannt werden. Die vertikale Ausrichtung des Hubmastes 6 hat weiterhin zur Folge, dass das Lastaufnahmemittel 20 unabhängig vom Reifenverschleiß immer horizontal ausgerichtet ist, so dass ein sauberes Einstechen der Gabelzinken in Paletten oder Gitterboxen möglich ist und das autonome Flurförderzeug 1 unabhängig vom Reifenverschleiß Paletten oder Gitterboxen sicher und problemlos aufnehmen und absetzen kann.

Die negativen Auswirkungen des Reifenverschleißes an der Vorderradachse 5 werden erfindungsgemäß dadurch kompensiert, dass in der Fahrzeugsteuerungseinrichtung 8 eine Begrenzung der maximal zulässigen Fahrgeschwindigkeit, insbesondere in Rückwärtsfahrtrichtung, vorgenommen wird. Hierbei wird die maximal zulässige Fahrgeschwindigkeit derart angepasst und reduziert, dass das Flurförderzeug 1 innerhalb der verkürzten Reichweite des nach unten geneigten Entfernungssensors 2 bzw. Kollisionssensors 16 und/oder innerhalb der Reichweite, wenn der nach oben geneigte Entfernungssensor 12 bzw. Kollisionssensor 17 das flach auf dem Fahrboden 7 liegende Hindernis 14 erfasst, angehalten werden kann.

Mit der genauen Kenntnis der aktuellen Position des Entfernungssensors 2 bzw. Kollisionssensors 16 und des Entfernungssensors 12 bzw. Kollisionssensors 17, insbesondere deren Höhe über dem Fahrboden 7, und der Ausrichtung des Entfernungssensors 2 bzw. Kollisionssensors 16 und des Entfernungssensors 12 bzw. Kollisionssensors 17, insbesondere deren Neigungswinkel gegen den Fahrboden 7, kann exakt berechnet werden, wie weit der Messstrahl des Entfernungssensors 2 bzw. Kollisionssensors 16 an der Vorderradachse 5 reicht, bis er auf den Fahrboden 7 trifft, beziehungsweise wie weit der Messtrahl des Entfernungssensors 12 bzw. Kollisionssensors 17 sehen kann, bis er das Hindernis 14 von einer vorgegebenen Höhe von zum Beispiel 200 mm nicht mehr erkennen kann. Somit kann wiederum abgeleitet werden, wie schnell das autonome Flurförderzeug mit dem aktuell vorliegenden Reifenverschleiß maximal, insbesondere in Rückwärtsfahrtrichtung, fahren darf, damit das Flurförderzeug 1 rechtzeitig vor dem Hindernis 13 bzw. 14 angehalten werden kann und zum Stehen kommt. Diese maximale Fahrgeschwindigkeit kann entsprechend des Reifenverschleißes ständig in bestimmten Intervallen, beispielsweise täglich oder wöchentlich, angepasst werden. Somit kann das Flurförderzeug 1 sicher und effizient auch im automatisierten Zustand betrieben werden.

In der Figur 3 ist die Reifenverschleißmessung mittels der Reifenverschleißmesseinrichtung 15 veranschaulicht, welche den Entfernungssensor 2 bzw. Kollisionssensor 16 am neigbaren Hubmast 6, den Neigesensor 4 und den Lagesensor 3 sowie die Fahrzeugsteuerungseinrichtung 8 umfasst. Wird der neigbare Hubmast 6 derart geneigt, dass der Messstrahl des Entfernungssensors 2 bzw. Kollisionssensors 16 den Fahrboden 7 erreicht, kann der Entfernungssensor 2 bzw. Kollisionssensor 16, wie in der Detailskizze links unten gezeigt, die Entfernung I bis zum Berührpunkt seines Messstrahls mit dem Fahrboden 7 messen und ausgeben. In Verbindung mit dem Neigewinkel α des neigbaren Hubmastes 6, der vom Neigesensor 4 gemessen und ausgegeben wird, kann nun die Höhe h des Entfernungssensors 2 bzw. Kollisionssensors 16 über dem Fahrboden 7 in der Fahrzeugsteuerungseinrichtung 8 nach der Formel h = I x sin (α) ermittelt werden. Wird diese Messung täglich an einer definierten Stelle, an der der Fahrboden 7 eben und unbeschädigt ist, durchgeführt, ergibt die Änderung der Höhe h des Entfernungssensors 2 bzw. Kollisionssensors 16 über dem Fahrboden 7 die tägliche Änderung des Reifendurchmessers und somit den Reifenverschleiß der Radreifen 10 an der Vorderradachse 5.

Der Lagesensor 3 ist an oder im dem Fahrzeugchassis des Fahrzeugs 1 befestigt und misst den aktuell vorliegenden Nickwinkel des Fahrzeugs 1 entlang der Fahrzeuglängsachse. Durch Vergleich mit dem Nickwinkel im Ursprungszustand, bei dem neue, noch keinen Verschleiß aufweisende, Radreifen 10, 11 vorliegen, kann erkannt werden, ob der Reifenverschleiß der Radreifen 11 an der Hinterradachse 9 genauso groß ist, also der relative Nickwinkel = 0 ist, oder größer ist, also der relative Nickwinkel > 0 ist, oder kleiner ist, also der relative Nickwinkel < 0 ist, als der Reifenverschleiß der Radreifen 10 an der Vorderradachse 5. Mit Hilfe des Radstands kann der absolute Reifenverschleiß der Radreifen 11 an der Hinterradachse 9 in der Fahrzeugsteuerungseinrichtung 8 berechnet werden.

Von der Fahrzeugsteuerungseinrichtung 8 kann mittels des Entfernungssensors 2, des Neigesensors 4 und des Lagesensors 3 somit der Reifenverschleiß an den als Superelastik-Reifen oder Luftreifen ausgebildeten Radreifen 10, 11 an der Vorderachse und der Hinterachse des autonomen Flurförderzeugs 1 bestimmt werden und die aus dem Reifenverschleiß resultierende Position (Höhe über dem Fahrboden 7) und Ausrichtung (Neigungswinkel gegen den Fahrboden 7) der Entfernungssensoren 2, 12 erkannt und berechnet werden.

Mit der Integration des vorderen lastseitigen Entfernungssensors 2, der auch als Kollisionssensor 16 zur Hinderniserkennung dient, in den Hubmast 6 ist der Entfernungssensors 2 bzw. Kollisionssensor 16 zusammen mit dem Hubmast 6 neigbar. Somit kann der sowieso vorhandene Kollisionssensor 16 zusätzlich zur Ermittlung des Reifenverschleißes an der Vorderradachse 5 genutzt werden. Zudem ist der Kollisionssensor 16 geschützt zwischen den Hubmastprofilen des Hubmastes 6 positioniert und steht so nicht über die Fahrzeugkontur hinaus, wodurch die Beschädigungsgefahr verringert wird.

Durch die Nutzung des als absolut messenden Lagesensors ausgebildeten Neigesensors 4 an dem neigbaren Hubmast 6 wird somit der Betrieb eines autonomen Flurförderzeugs 1 mit als Superelastik-Reifen ausgebildeten Radreifen 10, 11 erst sinnvoll möglich, da durch entsprechendes Neigen des Hubmastes 6 eine reifenverschleißbedingte Schrägstellung des Lastaufnahmemittels 20 kompensiert werden kann und erzielt werden kann, dass das Lastaufnahmemittel 20 unabhängig vom Reifenverschleiß immer horizontal ausgerichtet ist, so dass ein sauberes Einstechen der Gabelzinken in Paletten oder Gitterboxen möglich ist und das autonome Flurförderzeug 1 unabhängig vom Reifenverschleiß Paletten oder Gitterboxen sicher und problemlos aufnehmen und absetzen kann.

Die Anpassung der maximalen Fahrgeschwindigkeit des autonomen Flurförderzeugs an den Reifenverschleiß der als Superelastik-Reifen oder Luftreifen ausgebildeten Radreifen 10, 11 ermöglicht weiterhin eine effiziente Nutzung des autonomen Flurförderzeugs 1 mit als Superelastik-Reifen oder Luftreifen ausgebildeten Radreifen 10, 11, da mit neuen Radreifen 10, 11 höhere maximale Fahrgeschwindigkeiten zugelassen werden können als bei ungleichmäßig verschlissenen Radreifen 10, 11.

## Patentansprüche

1. Verfahren zum Betreiben eines auf Radreifen (10, 11), insbesondere Superelastik-Reifen oder Luftreifen, auf einem Fahrboden (7) fahrenden Flurförderzeugs (1), wobei Fahrzeugeigenschaften des Flurförderzeugs (1) von einer Fahrzeugsteuerungseinrichtung (8) gesteuert werden und ein Reifenverschleiß der Radreifen (10, 11) von einer Reifenverschleißmesseinrichtung (15) gemessen wird, wobei mindestens eine Fahrzeugeigenschaft des Flurförderzeugs (1) in Abhängigkeit vom Reifenverschleiß der Radreifen (10, 11) aktiv durch die Fahrzeugsteuerungseinrichtung (8) beeinflusst wird, wobei als Fahrzeugeigenschaft eine maximal zulässige Fahrgeschwindigkeit des Flurförderzeugs (1) verwendet wird, die in Abhängigkeit vom Reifenverschleiß der Radreifen (10, 11) aktiv verändert wird, insbesondere die maximal zulässige Fahrgeschwindigkeit in Rückwärtsfahrtrichtung, **dadurch gekennzeichnet, dass** die maximal zulässige Fahrgeschwindigkeit in Abhängigkeit von einer Veränderung der Position und/oder Ausrichtung eines am Flurförderzeug (1) angeordneten Kollisionssensors (16; 17) gegenüber dem Fahrboden (7) infolge des Reifenverschleißes der Radreifen (10, 11) angepasst wird.

2. Verfahren nach Anspruch 1, **dadurch gekennzeichnet, dass** als Fahrzeugeigenschaft mindestens eine veränderbare Ausrichtung einer Fahrzeugvorrichtung verwendet wird, wobei die Ausrichtung in Abhängigkeit vom Reifenverschleiß der Radreifen (10, 11) derart verändert wird, dass eine Neigung des Flurförderzeugs (1) infolge des Reifenverschleißes der Radreifen (10, 11) kompensiert wird.

3. Verfahren nach Anspruch 2, **dadurch gekennzeichnet, dass** als Fahrzeugvorrichtung ein Lastaufnahmemittel des Flurförderzeugs (1) verwendet wird, wobei die Ausrichtung des Lastaufnahmemittels relativ zum Flurförderzeug (1) in Abhängigkeit vom Reifenverschleiß der Radreifen (10, 11) aktiv so verändert wird, dass die absolute Ausrichtung des Lastaufnahmemittels gegenüber dem Fahrboden (7) konstant bleibt.

4. Verfahren nach Anspruch 3, **dadurch gekennzeichnet, dass** als Lastaufnahmemittel ein Hubmast (6) verwendet wird, und die Ausrichtung des Hubmastes (6) relativ zum Flurförderzeug (1) derart in Abhängigkeit vom Reifenverschleiß der Radreifen (10, 11) aktiv verändert wird, dass die absolute Ausrichtung des Hubmastes (6) vertikal bleibt.

5. Verfahren nach Anspruch 3 oder 4, **dadurch gekennzeichnet, dass** als Lastaufnahmemittel Gabelzinken verwendet werden, und die Ausrichtung der Gabelzinken relativ zum Flurförderzeug (1) derart in Abhängigkeit vom Reifenverschleiß der Radreifen (10, 11) aktiv verändert werden, dass die absolute Ausrichtung der Gabelzinken horizontal bleibt.

6. Verfahren nach einem der Ansprüche 2 bis 5, **dadurch gekennzeichnet, dass** als Fahrzeugvorrichtung ein Kollisionssensor (16) des Flurförderzeugs (1) verwendet wird, wobei die Ausrichtung des Kollisionssensors (16) relativ zum Flurförderzeug (1) in Abhängigkeit vom Reifenverschleiß der Radreifen (10, 11) aktiv so verändert wird, dass die absolute Ausrichtung des Kollisionssensors (16) gegenüber dem Fahrboden (7) konstant bleibt.

7. Verfahren nach Anspruch 1, **dadurch gekennzeichnet, dass** die maximal zulässige Fahrgeschwindigkeit derart angepasst wird, dass das Flurförderzeug (1) innerhalb der Reichweite des Kollisionssensors (16; 17) angehalten werden kann.

8. Verfahren nach einem der Ansprüche 1 bis 7, **dadurch gekennzeichnet, dass** der Reifenverschleiß mittels mindestens eines am Flurförderzeug (1) angeordneten Entfernungssensors (2), der die Entfernung des Entfernungssensors (2) zum Fahrboden (7) misst, ermittelt wird.

9. Verfahren nach Anspruch 8, **dadurch gekennzeichnet, dass** der Entfernungssensor (2) die Entfernung des Entfernungssensors (2) zum Fahrboden (7) entlang einer senkrecht zum Fahrboden (7) ausgerichteten Messstrecke misst.

10. Verfahren nach Anspruch 8, **dadurch gekennzeichnet, dass** der Entfernungssensor (2) die Entfernung des Entfernungssensors (2) zum Fahrboden (7) entlang einer um einen Neigungswinkel (α) zum Fahrboden (7) geneigt ausgerichteten Messstrecke misst.

11. Verfahren nach Anspruch 10, **dadurch gekennzeichnet, dass** der Neigungswinkel (α) fest vorgegeben ist.

12. Verfahren nach Anspruch 10, **dadurch gekennzeichnet, dass** der Neigungswinkel (α) veränderlich ist, wobei der Neigungswinkel (α) mittels eines Neigesensors (4) gemessen wird.

13. Verfahren nach Anspruch 12, **dadurch gekennzeichnet, dass** der Entfernungssensor (2) beim Messvorgang aus einer Ausgangsposition mit parallel zum Fahrboden (7) ausgerichteter Messstrecke in eine Messposition mit um den Neigungswinkel (α) zum Fahrboden (7) geneigt ausgerichteter Messstrecke gebracht wird und aus der gemessenen Entfernung des Entfernungssensors (2) zum Berührpunkt der Messstrecke mit dem Fahrboden (7) und dem gemessenen Neigungswinkel (α) der Messtrecke die senkrechte Entfernung des Entfernungssensors (2) zum Fahrboden (7) berechnet wird.

14. Verfahren nach einem der Ansprüche 8 bis 13, **dadurch gekennzeichnet, dass** als Entfernungssensor (2) ein an einer neigbaren Vorrichtung, insbesondere einem Hubmast (6) des Flurförderzeugs (1), angeordneter Entfernungssensor (2) verwendet wird.

15. Verfahren nach einem der Ansprüche 8 bis 14, **dadurch gekennzeichnet, dass** als Entfernungssensor (2) ein Kollisionssensor (16) des Flurförderzeugs (1) verwendet wird.

16. Verfahren nach einem der Ansprüche 8 bis 15, **dadurch gekennzeichnet, dass** als Entfernungssensor (2) ein optischer Sensor, insbesondere ein Laserscanner oder eine Kamera, oder ein Ultraschallsensor verwendet wird.

17. Verfahren nach einem der Ansprüche 8 bis 16, **dadurch gekennzeichnet, dass** bei einem Flurförderzeug (1) mit mindestens zwei Radachsen (5, 9) mittels des Entfernungssensors (2) die Entfernung zum Fahrboden (7) im Bereich einer der Radachsen (5) gemessen wird, und aus einer Veränderung dieses Messwertes die Veränderung des Reifendurchmessers an der gemessenen Radachse (5) ermittelt wird und die Veränderung des Reifendurchmessers an der nicht gemessenen Radachse (9) aus der Veränderung eines von einem Lagesensor (3) gemessenen Nickwinkels der gedachten Verbindungsachse zwischen den Radachsen (5, 9) des Flurförderzeugs (1) bei vorgegebenem Radstand ermittelt wird.

18. Flurförderzeug (1) zur Durchführung des Verfahrens nach einem der Ansprüche 1 bis 17 mit einer Fahrzeugsteuerungseinrichtung (8) und einer Reifenverschleißmesseinrichtung (15), wobei die Fahrzeugsteuerungseinrichtung (8) mit der Reifenverschleißmesseinrichtung (15) in Wirkverbindung steht, und die Fahrzeugsteuerungseinrichtung (8) dazu eingerichtet ist, von der Reifenverschleißmesseinrichtung (15) übermittelte Messwerte auszuwerten und mindestens eine Fahrzeugeigenschaft des Flurförderzeugs (1) in Abhängigkeit vom Reifenverschleiß aktiv zu beeinflussen.

19. Flurförderzeug (1) nach Anspruch 18, **dadurch gekennzeichnet, dass** es als Gabelstapler, Schlepper, Plattformwagen, Hubwagen, Schubmaststapler oder Kommissionierfahrzeug, ausgebildet ist.

20. Flurförderzeug (1) nach Anspruch 18 oder 19, **dadurch gekennzeichnet, dass** es als autonomes Fahrzeug, insbesondere als autonomes Transportfahrzeug oder als mobiler Kommissionierroboter, ausgebildet ist.

## Claims

1. Method for operating an industrial truck (1) driving over a driving surface (7) on wheel tyres (10, 11), in particular superelastic tyres or pneumatic tyres, wherein vehicle characteristics of the industrial truck (1) are controlled by a vehicle control device (8) and tyre wear of the wheel tyres (10, 11) is measured by a tyre wear measuring device (15), wherein at least one vehicle characteristic of the industrial truck (1) is actively influenced by the vehicle control device (8) as a function of the tyre wear of the wheel tyres (10, 11), wherein a maximum permissible driving speed of the industrial truck (1), which is changed actively as a function of the tyre wear of the wheel tyres (10, 11), is used as the vehicle characteristic, in particular the maximum permissible driving speed in the reverse direction of travel, **characterized in that** the maximum permissible driving speed is adapted as a function of a change in the position and/or orientation of a collision sensor (16; 17) arranged on the industrial truck (1) relative to the driving surface (7) caused by the tyre wear of the wheel tyres (10, 11).

2. Method according to Claim 1, **characterized in that** at least one changeable orientation of a vehicle apparatus is used as the vehicle characteristic, wherein the orientation is changed as a function of the tyre wear of the wheel tyres (10, 11) so as to compensate for an inclination of the industrial truck (1) caused by the tyre wear of the wheel tyres (10, 11).

3. Method according to Claim 2, **characterized in that** a load-carrying means of the industrial truck (1) is used as the vehicle apparatus, wherein the orientation of the load-carrying means relative to the industrial truck (1) is changed actively as a function of the tyre wear of the wheel tyres (10, 11) such that the absolute orientation of the load-carrying means relative to the driving surface (7) remains constant.

4. Method according to Claim 3, **characterized in that** a lift mast (6) is used as the load-carrying means, and the orientation of the lift mast (6) relative to the industrial truck (1) is changed actively as a function of the tyre wear of the wheel tyres (10, 11) such that the absolute orientation of the lift mast (6) remains vertical.

5. Method according to Claim 3 or 4, **characterized in that** fork arms are used as the load-carrying means, and the orientation of the fork arms relative to the industrial truck (1) is changed actively as a function of the tyre wear of the wheel tyres (10, 11) such that the absolute orientation of the fork arms remains horizontal.

6. Method according to one of Claims 2 to 5, **characterized in that** a collision sensor (16) of the industrial truck (1) is used as the vehicle apparatus, wherein the orientation of the collision sensor (16) relative to the industrial truck (1) is changed actively as a function of the tyre wear of the wheel tyres (10, 11) such that the absolute orientation of the collision sensor (16) relative to the driving surface (7) remains constant.

7. Method according to Claim 1, **characterized in that** the maximum permissible driving speed is adapted such that the industrial truck (1) is able to be stopped within the range of the collision sensor (16; 17).

8. Method according to one of Claims 1 to 7, **characterized in that** the tyre wear is determined by way of at least one distance sensor (2) that is arranged on the industrial truck (1) and measures the distance from the distance sensor (2) to the driving surface (7).

9. Method according to Claim 8, **characterized in that** the distance sensor (2) measures the distance from the distance sensor (2) to the driving surface (7) along a measurement path oriented perpendicular to the driving surface (7).

10. Method according to Claim 8, **characterized in that** the distance sensor (2) measures the distance from the distance sensor (2) to the driving surface (7) along a measurement path oriented in a manner inclined by an angle of inclination (α) with respect to the driving surface (7).

11. Method according to Claim 10, **characterized in that** the angle of inclination (α) is fixed.

12. Method according to Claim 10, **characterized in that** the angle of inclination (α) is variable, wherein the angle of inclination (α) is measured by way of a tilt sensor (4).

13. Method according to Claim 12, **characterized in that** the distance sensor (2) is brought, during the measurement process, from a starting position with a measurement path oriented parallel to the driving surface (7) to a measuring position with a measurement path oriented in a manner inclined by the angle of inclination (α) with respect to the driving surface (7), and the vertical distance from the distance sensor (2) to the driving surface (7) is computed from the measured distance from the distance sensor (2) to the point of contact between the measurement path and the driving surface (7) and the measured angle of inclination (α) of the measurement path.

14. Method according to one of Claims 8 to 13, **characterized in that** a distance sensor (2) arranged on a tiltable apparatus, in particular a lift mast (6) of the industrial truck (1), is used as the distance sensor (2).

15. Method according to one of Claims 8 to 14, **characterized in that** a collision sensor (16) of the industrial truck (1) is used as the distance sensor (2).

16. Method according to one of Claims 8 to 15, **characterized in that** an optical sensor, in particular a laser scanner or a camera, or an ultrasonic sensor is used as the distance sensor (2).

17. Method according to one of Claims 8 to 16, **characterized in that**, in the case of an industrial truck (1) having at least two wheel axles (5, 9), the distance sensor (2) is used to measure the distance to the driving surface (7) in the region of one of the wheel axles (5), and the change in the tyre diameter on the measured wheel axle (5) is determined from a change in this measured value, and the change in the tyre diameter on the unmeasured wheel axle (9) is determined from the change in a pitch angle, measured by a position sensor (3), of the imaginary connecting axis between the wheel axles (5, 9) of the industrial truck (1), given a fixed wheelbase.

18. Industrial truck (1) for carrying out the method according to one of Claims 1 to 17 with a vehicle control device (8) and a tyre wear measuring device (15), wherein the vehicle control device (8) is operatively connected to the tyre wear measuring device (15), and the vehicle control device (8) is configured to evaluate measured values transmitted by the tyre wear measuring device (15) and to actively influence at least one vehicle characteristic of the industrial truck (1) as a function of the tyre wear.

19. Industrial truck (1) according to Claim 18, **characterized in that** it is in the form of a forklift truck, tractor, platform truck, pallet truck, reach truck or picking vehicle.

20. Industrial truck (1) according to Claim 18 or 19, **characterized in that** it is in the form of an autonomous vehicle, in particular an autonomous transport vehicle or a mobile picking robot.

## Revendications

1. Procédé pour faire fonctionner un chariot de manutention (1) se déplaçant sur un sol (7) sur des bandages de roue (10, 11), en particulier des pneus superélastiques ou pneumatiques, des caractéristiques de véhicule du chariot de manutention (1) étant commandées par un dispositif de commande de véhicule (8) et une usure des pneus des bandages de roue (10, 11) étant mesurée par un dispositif de mesure d'usure des pneus (15), au moins une caractéristique du chariot de manutention (1) étant influencée activement par le dispositif de commande de véhicule (8) en fonction de l'usure des pneus des bandages de roue (10, 11), une vitesse de déplacement maximale autorisée du chariot de manutention (1) étant utilisée en tant que caractéristique de véhicule, laquelle est modifiée activement en fonction de l'usure des pneus des bandages de roue (10, 11), en particulier la vitesse de déplacement maximale autorisée dans la direction de marche arrière, **caractérisé en ce que** la vitesse de déplacement maximale autorisée est adaptée en fonction d'une modification de la position et/ou de l'orientation d'un capteur de collision (16 ; 17) disposé sur le chariot de manutention (1) par rapport au sol (7) en raison de l'usure des pneus des bandages de roue (10, 11).

2. Procédé selon la revendication 1, **caractérisé en ce qu'**au moins une orientation pouvant être modifiée d'un dispositif de véhicule est utilisée en tant que caractéristique de véhicule, l'orientation étant modifiée en fonction de l'usure des pneus des bandages de roue (10, 11) de telle manière qu'une inclinaison du chariot de manutention (1) est compensée en raison de l'usure des pneus des bandages de roue (10, 11).

3. Procédé selon la revendication 2, **caractérisé en ce qu'**un moyen de réception de charge du chariot de manutention (1) est utilisé en tant que dispositif de véhicule, l'orientation du moyen de réception de charge par rapport au chariot de manutention (1) étant modifiée activement en fonction de l'usure des pneus des bandages de roue (10, 11) de telle sorte que l'orientation absolue du moyen de réception de charge par rapport au sol (7) reste constante.

4. Procédé selon la revendication 3, **caractérisé en ce qu'**un mât de levage (6) est utilisé en tant que moyen de réception de charge, et l'orientation du mât de levage (6) par rapport au chariot de manutention (1) est modifiée activement en fonction de l'usure des pneus des bandages de roue (10, 11) de telle sorte que l'orientation absolue du mât de levage (6) reste verticale.

5. Procédé selon la revendication 3 ou 4, **caractérisé en ce que** des fourches sont utilisées en tant que moyen de réception de charge, et l'orientation des fourches par rapport au chariot de manutention (1) est modifiée activement en fonction de l'usure des pneus des bandages de roue (10, 11) de telle sorte que l'orientation absolue des fourches reste horizontale.

6. Procédé selon l'une des revendications 2 à 5, **caractérisé en ce qu'**un capteur de collision (16) du chariot de manutention (1) est utilisé en tant que dispositif de véhicule, l'orientation du capteur de collision (16) par rapport au chariot de manutention (1) étant modifiée activement en fonction de l'usure des pneus des bandages de roue (10, 11) de telle sorte que l'orientation absolue du capteur de collision (16) par rapport au sol (7) reste constante.

7. Procédé selon la revendication 1, **caractérisé en ce que** la vitesse de déplacement maximale autorisée est adaptée de telle manière que le chariot de manutention (1) puisse être arrêté à l'intérieur du rayon d'action du capteur de collision (16 ; 17).

8. Procédé selon l'une des revendications 1 à 7, **caractérisé en ce que** l'usure des pneus est déterminée au moyen d'au moins un capteur de distance (2) disposé sur le chariot de manutention (1), qui mesure la distance du capteur d'éloignement (2) par rapport au sol (7).

9. Procédé selon la revendication 8, **caractérisé en ce que** le capteur de distance (2) mesure la distance du capteur de distance (2) par rapport au sol (7) le long d'un tronçon de mesure orienté de manière perpendiculaire par rapport au sol (7).

10. Procédé selon la revendication 8, **caractérisé en ce que** le capteur de distance (2) mesure la distance du capteur de distance (2) par rapport au sol (7) le long d'un tronçon de mesure orienté de manière inclinée d'un angle d'inclinaison (α) par rapport au sol (7).

11. Procédé selon la revendication 10, **caractérisé en ce que** l'angle d'inclinaison (α) est spécifié de manière fixe.

12. Procédé selon la revendication 10, **caractérisé en ce que** l'angle d'inclinaison (α) est variable, l'angle d'inclinaison (α) étant mesuré au moyen d'un capteur d'inclinaison (4).

13. Procédé selon la revendication 12, **caractérisé en ce que** le capteur de distance (2) est amené, lors de l'opération de mesure, depuis une position de départ avec un tronçon de mesure orienté de manière parallèle par rapport au sol (7) dans une position de mesure avec un tronçon de mesure orienté de manière inclinée de l'angle d'inclinaison (α) par rapport au sol (7) et la distance perpendiculaire du capteur de distance (2) par rapport au sol (7) est calculée à partir de la distance mesurée du capteur de distance (2) par rapport au point de contact du tronçon de mesure avec le sol (7) et de l'angle d'inclinaison (α) mesuré du tronçon de mesure.

14. Procédé selon l'une des revendications 8 à 13, **caractérisé en ce qu'**un capteur de distance (2) disposé sur un dispositif inclinable, en particulier un mât de levage (6) du chariot de manutention (1), est utilisé en tant que capteur de distance (2).

15. Procédé selon l'une des revendications 8 à 14, **caractérisé en ce qu'**un capteur de collision (16) du chariot de manutention (1) est utilisé en tant que capteur de distance (2).

16. Procédé selon l'une des revendications 8 à 15, **caractérisé en ce qu'**un capteur optique, en particulier un scanner laser ou une caméra ou un capteur à ultrasons, est utilisé en tant que capteur de distance (2).

17. Procédé selon l'une des revendications 8 à 16, **caractérisé en ce que**, pour un chariot de manutention (1) avec au moins deux essieux de roue (5, 9), la distance par rapport au sol (7) dans la zone d'un des essieux de roue (5) est mesurée au moyen du capteur de distance (2), et la modification du diamètre de pneu est déterminée sur l'essieu de roue (5) mesuré à partir d'une modification de ladite valeur de mesure, et la modification du diamètre de pneu sur l'essieu de roue (9) non mesuré est déterminée à partir de la modification d'un angle de tangage, mesuré par un capteur de position (3), de l'axe de liaison imaginaire entre les essieux de roue (5, 9) du chariot de manutention (1) pour un empattement spécifié.

18. Chariot de manutention (1) destiné à effectuer le procédé selon l'une des revendications 1 à 17 avec un dispositif de commande de véhicule (8) et un dispositif de mesure d'usure des pneus (15), le dispositif de commande de véhicule (8) étant relié de manière fonctionnelle au dispositif de mesure d'usure des pneus (15), et le dispositif de commande de véhicule (8) étant mis au point pour évaluer des valeurs de mesure transmises par le dispositif de mesure d'usure des pneus (15) et pour influencer activement au moins une caractéristique de véhicule du chariot de manutention (1) en fonction de l'usure des pneus.

19. Chariot de manutention (1) selon la revendication 18, **caractérisé en ce qu'**il est réalisé en tant qu'un chariot élévateur à fourche, un tracteur, un chariot à plateforme, un chariot de levage, un chariot élévateur à mât rétractable ou un véhicule de préparation de commandes.

20. Chariot de manutention (1) selon la revendication 18 ou 19, **caractérisé en ce qu'**il est réalisé en tant qu'un véhicule autonome, en particulier en tant qu'un véhicule de transport autonome ou en tant qu'un robot mobile de préparation de commandes.
